# FASCICULE DE BREVET EUROPEEN

(11) **EP 3 170 417 B1**
(45) Date de publication et mention de la délivrance du brevet: **25.08.2021**
(21) Numéro de dépôt: 16002480.8
(22) Date de dépôt: 23.11.2016
(51) Int. Cl.: A43B 5/04

(54) **BAS DE COQUE POUR CHAUSSURE DE SKI ET CHAUSSURE DE SKI INCLUANT UN TEL BAS DE COQUE**
SCHALE FÜR SKISCHUH, UND SKISCHUH, DER EINE SOLCHE SCHALE UMFASST
SHELL BOTTOM FOR A SKI BOOT AND SKI BOOT INCLUDING SUCH A SHELL BOTTOM

(30) Priorité: 23.11.2015 FR 1502451
(43) Date de publication de la demande: 24.05.2017
(73) Titulaire: Salomon S.A.S., 74370 Metz-Tessy (FR)
(72) Inventeur: Couderc, Bernard, 74000 Annecy (FR); Marechal, Pierre-Alexis, 74330 Poisy (FR); Audouard, Jean-Yves, 74540 Gruffy (FR); Sahm, Bruno, 74000 Annecy (FR)
(74) Mandataire: Rambaud, Pascal

(56) Documents cités:
- EP-A1- 0 754 413
- EP-A1- 0 808 708
- EP-A1- 0 903 087
- DE-U- 1 940 028
- DE-U1- 20 319 072
- DE-U1- 20 319 072
- MARTINO COLONNA ET AL: "Materials, Designs and Standards Used in Ski-Boots for Alpine Skiing", SPORTS, vol. 1, no. 4, 21 octobre 2013 (2013-10-21), pages 78-113, XP055358557, DOI: 10.3390/sports1040078

## Description

### Domaine technique de l'invention

La présente invention se rapporte à un bas de coque pour chaussure de ski, notamment une chaussure de ski alpin, et à une chaussure de ski incluant un tel bas de coque, et à un procédé de fabrication d'un bas de coque.

### Etat de la technique

De manière connue, une chaussure de ski alpin est composée d'au moins trois parties principales :
- un bas de coque rigide en matériau plastique muni d'une partie inférieure formant une semelle destinée à venir se fixer sur un ski,
- un collier assemblé de manière pivotante sur le bas de coque et venant enserrer le bas de jambe de l'utilisateur,
- un chausson se logeant à l'intérieur du bas de coque.

Dans la conception d'une telle chaussure de ski, plusieurs paramètres doivent être pris en compte :
- le poids de la chaussure,
- la rigidité de la chaussure pour obtenir une conduite précise du ski,
- la souplesse de la chaussure pour conserver un certain confort de chaussant et de flexion

Par ailleurs, d'autres paramètres doivent aussi être pris en compte, comme par exemple la facilité de chaussage/déchaussage, la possibilité de s'adapter à différentes formes de pied.

Ces différents critères sont forcément tous difficiles à remplir. On comprend facilement qu'une augmentation de la rigidité de la chaussure entraînera une augmentation de son poids, tandis que l'augmentation de la rigidité ira à l'encontre du confort de chaussant.

Pour répondre à la problématique définie ci-dessus, plusieurs approches ont déjà été explorées.

Une première solution consiste à jouer sur les épaisseurs du matériau employé pour conférer de la rigidité dans certaines zones où cela est nécessaire et de la souplesse dans d'autres zones. Cette solution n'est cependant pas satisfaisante, car elle a tendance à alourdir le bas de coque.

Une deuxième solution consiste à employer deux matériaux distincts réalisés sur la base d'un même composant. Souvent, il s'agit de deux matériaux à base de polyuréthane. Les deux matériaux à base de polyuréthane sont ainsi choisis avec des niveaux de raideur distincts afin de satisfaire à la fois au critère de souplesse et au critère de rigidité sur le bas de coque. Cependant, le polyuréthane est un composé dense. De plus, on est amené à le mouler à une épaisseur élevée, par exemple supérieure à 4mm, pour assurer sa fiabilité au vieillissement. Cependant, en augmentant l'épaisseur du bas de coque, on augmente ainsi son poids. Cette deuxième solution n'est donc pas satisfaisante.

La demande de brevet FR2077184 propose pour sa part une chaussure de ski comprenant un bas de coque doté d'une première structure intérieure constituée par une matière plastique ayant des propriétés de souplesse et de légèreté particulières et une deuxième structure disposée à l'extérieur de la première structure de façon à la recouvrir partiellement et constituée par une matière plastique ayant des propriétés de plus grande raideur.

La solution proposée dans cette demande de brevet n'est cependant pas satisfaisante car l'architecture présente une double épaisseur dans certaines zones, augmentant notamment le poids de la chaussure et réduisant son confort. Le document EP0808708 A décrit aussi une chaussure de ski avec un châssis plus rigide et une enveloppe plus souple.

D'autre part, un problème supplémentaire auquel doivent faire face les concepteurs et constructeurs de chaussure de ski alpin comprenant des coques ou des éléments de coque rigides est que la rigidité et la souplesse sont variables en fonction de la température. Ainsi, une chaussure dont la rigidité et le confort conviennent à un utilisateur au moment de l'achat, se révèle beaucoup trop rigide et inconfortable au sommet des pistes sous une température inférieure à -10°C. Par exemple, pour un matériau tel que le polyuréthane, le niveau de raideur en flexion ou, en d'autres termes, le module de flexion augmente fortement lorsque la température baisse. En effet, entre le module de flexion à +20°C et celui du même polyuréthane à -20°C, il y a un facteur compris entre 4 et 6.

Le but de l'invention est de proposer une coque de chaussure de ski ou un élément faisant partie d'une telle coque qui permette de répondre aux exigences de rigidité, souplesse et poids définies ci-dessus. Le but de l'invention est également de proposer une coque ou un élément de coque qui garde sensiblement les mêmes caractéristiques mécaniques de rigidité et de souplesse dans toute la gamme de température d'utilisation de la chaussure de ski.

### Exposé de l'invention

Ce but est atteint par la mise en place d'un procédé de fabrication d'un bas de coque en matière plastique pour chaussure de ski, ledit bas de coque étant destiné à envelopper un pied ou une partie d'un pied et comprenant les étapes suivantes :
- Moulage d'une première partie avec un premier matériau,
- Surmoulage d'une deuxième partie avec un deuxième matériau ;
ledit premier matériau possédant un premier niveau de raideur en flexion qui est plus faible que le niveau de raideur en flexion du deuxième matériau.

Selon l'invention, ledit premier matériau possède un premier niveau de raideur en flexion compris entre 150 et 1000 MPa et celui du deuxième matériau est compris entre 200 et 2000 MPa Selon l'invention, ledit premier matériau est à base de polyuréthane et le deuxième matériau est à base de polyamide. De préférence, l'objectif de l'invention est atteint par la fourniture d'un bas de coque en matière plastique pour chaussure de ski, destiné à envelopper un pied ou une partie de pied et comprenant une première partie formant une enveloppe et une deuxième partie formant un châssis, ledit châssis comportant au moins : une partie inférieure formant une semelle destinée à coopérer avec une fixation sur un ski; une partie arrière formant une arête dorsale agencée pour longer le tendon d'Achille du pied; une partie intermédiaire formant un étrier comprenant une base située dans le prolongement de l'arête dorsale et s'étendant pour envelopper, depuis sa base, par une première zone située sur le pan médial, la malléole médiale du pied, et par une deuxième zone située sur le pan latéral, la malléole latérale du pied; le bas de coque étant obtenu par surmoulage dudit châssis réalisé dans un deuxième matériau sur ladite enveloppe réalisée dans un premier matériau ; le premier matériau possédant un niveau de raideur en flexion plus faible que le niveau de raideur en flexion du deuxième matériau,

L'objectif de l'invention est atteint par la fourniture d'un bas de coque qui outre les caractéristiques du paragraphe précédent comprend toute combinaison techniquement admissible des caractéristiques énumérées ci-dessous :
- Le châssis comporte également un pontet reliant la première zone de l'étrier à ladite partie bord de semelle située du côté médial.
- Une partie bord de semelle qui suit le contour de la semelle du côté médial du pied et du côté latéral du pied.
- La partie intermédiaire est agencée pour envelopper, jusqu'à la partie bord de semelle, par une première zone, la malléole et le talon du côté médial du pied, et par une deuxième zone, la malléole et le talon du côté latéral du pied.
- Le châssis comporte un spoiler qui prolonge l'arête dorsale et la base de l'étrier vers le haut du bas de coque.
- Le matériau à base de polyamide présente une densité comprise entre 0.90 et 1.07.
- Le matériau à base de polyamide est choisi parmi le PA6, PA6/6, PA6/10, PA4/10, PA11, PA12.
- Le matériau à base de polyamide comporte des modifiants chocs.
- Le matériau à base de polyuréthane présente une densité comprise entre 1.15 et 1.25.
- Le matériau est choisi parmi le polyuréthane, un mélange de polyuréthane et de caprolactone, le polyuréthane éther, un mélange de polyuréthane éther et de caprolactone, le polyurethane ester, un mélange de polyurethane ester et de caprolactone.

L'objectif de l'invention est également atteint par la fourniture d'une chaussure de ski, comportant un bas de coque tel que défini ci-dessus.

### Brève description des figures

D'autres caractéristiques et avantages vont apparaître dans la description détaillée qui suit faite en regard des dessins annexés dans lesquels :
- la figure 1 représente en vue de côté une chaussure de ski alpin d'un design classique,
- la figure 2 montre une vue en perspective schématique du côté arrière d'une chaussure de ski classique, le collier étant assemblé sur le bas de coque et représenté en pointillés pour mieux comprendre l'architecture de la chaussure,
- les figures 3A et 3B permettent d'illustrer l'architecture classique d'un bas de coque, respectivement vu du côté médial et vu du côté latéral,
- les figures 4A à 4C représentent, un premier mode de réalisation du bas de coque de l'invention, respectivement vu du côté médial, vu du côté latéral et vu du de dessus,
- les figures 5A à 5C représentent, un deuxième mode de réalisation du bas de coque de l'invention, respectivement vu du côté médial, vu du côté latéral et vu de dessus,
- les figures 6A et 6B représentent, un troisième mode de réalisation du bas de coque de l'invention, respectivement vu du côté médial et vu du côté latéral.

### Description détaillée d'au moins un mode de réalisation

La présente invention se rapporte à un bas de coque de chaussure de ski. Il s'agit, de préférence, d'une chaussure de ski alpin de type « entrée avant » mais il peut s'agir également d'une chaussure de ski destinée à la pratique du ski de randonnée, voire du ski de fond.

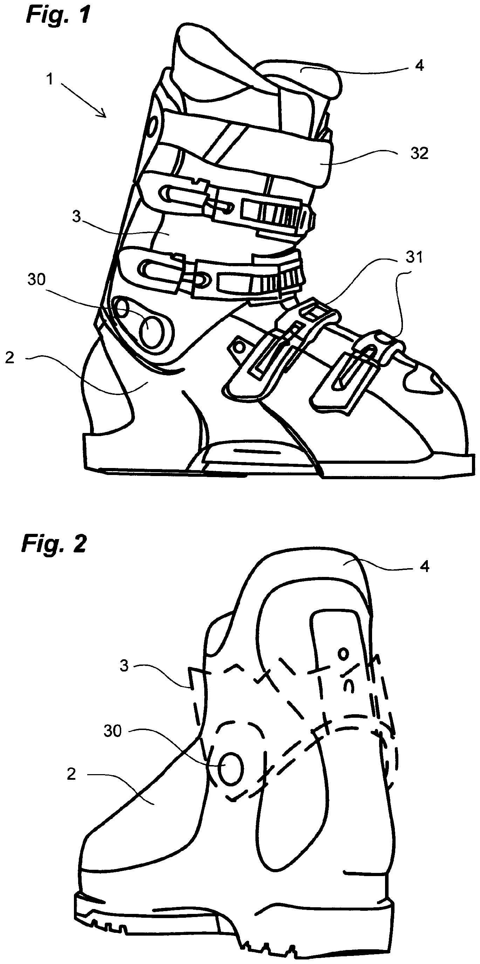

De manière connue, une chaussure de ski alpin 1 à coque rigide telle que représentée sur la figure 1 comporte une partie inférieure, dénommée communément bas de coque 2, une partie supérieure, dénommée communément collier 3 et un chausson 4. Collier et bas de coque constituent deux des éléments constitutifs de la coque. Comme représenté sur la figure 2, le collier 3 est assemblé de manière pivotante sur le bas de coque à l'aide d'une articulation 30, de manière à permettre une rotation relative entre le collier 3 et le bas de coque 2. Grâce à cet agencement, l'utilisateur garde la possibilité de faire des mouvements de flexion lors de la pratique du ski ou de la marche, sans être gêné par la rigidité de la coque, ce qui lui confère un certain confort dans sa pratique. Le chausson 4 est pour sa part logé, généralement de manière amovible, dans le bas de coque 2. Des moyens de fermeture de la chaussure comportant plusieurs crochets 31 et éventuellement une sangle 32, dite sangle bas de jambe, sont prévus pour venir serrer la chaussure sur le pied et le bas de la jambe de l'utilisateur. Les crochets 31, par exemple au nombre de quatre sur la figure 1, sont prévus sur le collier 3 et sur le bas de coque 2.

L'invention se rapporte plus particulièrement au bas de coque 2 d'une telle chaussure de ski.

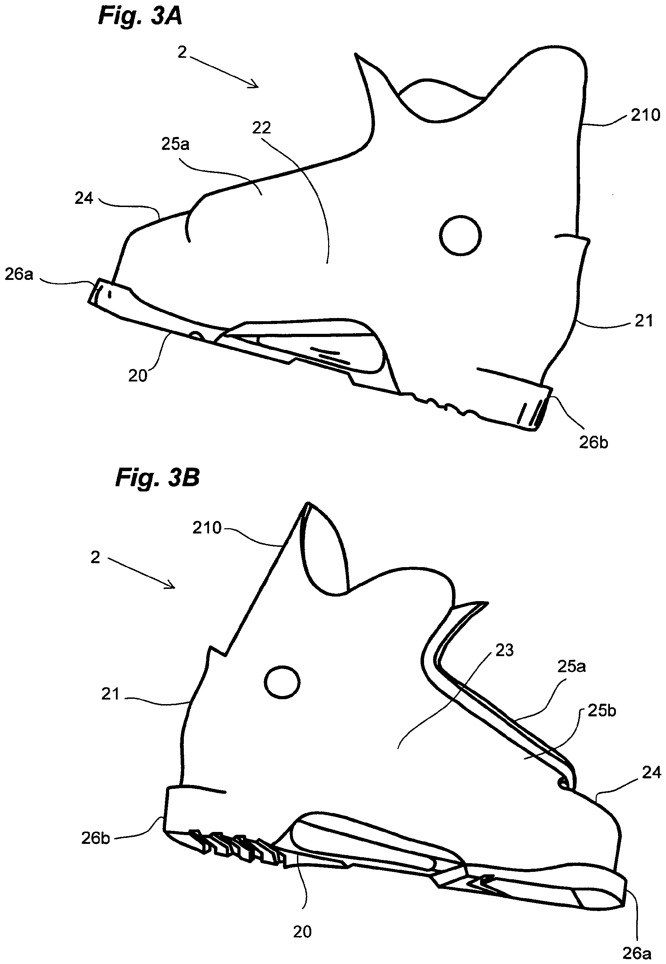

Dans la suite de la description et en référence aux figures 3A et 3B, on utilisera les termes suivants pour définir l'architecture d'un bas de coque de chaussure de ski :
- semelle 20 qui correspond à la partie inférieure du bas de coque et qui est destiné à venir se fixer sur le ski, celle-ci pouvant recevoir des patins venant en contact avec la surface du ski et de la fixation,
- embouts 26a, 26b présents aux deux extrémités de la semelle 20 et qui permettent la fixation de la chaussure de ski dans un dispositif de fixation approprié,
- arête dorsale 21 qui correspond à la partie du bas de coque qui est destinée à longer le tendon d'Achille du pied,
- pan médial 22 qui correspond à la partie du bas de coque s'étendant du côté médial du pied,
- pan latéral 23 qui correspond à la partie du bas de coque s'étendant du côté latéral du pied,
- boîte à orteils 24 située sur l'avant et destiné à loger les orteils du pied,
- spoiler 210 arrière prolongeant l'arête dorsale 21 vers le haut du bas de coque pour se positionner au niveau du mollet de l'utilisateur.

Le pan latéral et le pan médial se rejoignent d'une part par l'arête dorsale 21 et d'autre part par la boîte à orteils 24. Le pan médial 22 et le pan latéral 23 sont ainsi agencés pour au moins recouvrir le talon du pied, respectivement du côté médial et du côté latéral ainsi que la malléole du pied, respectivement du côté médial et du côté latéral.

Au niveau du coup de pied, il existe deux architectures distinctes. Dans une première architecture qui est représentée sur les figures 3A et 3B, le pan latéral et le pan médial se prolongent l'un et l'autre de manière à former deux rabats 25a, 25b se chevauchant au niveau du cou-de-pied et sur l'avant-pied. L'ajustement des deux rabats sur le pied de l'utilisateur sera réalisé par des crochets 31 déjà évoqués ci-dessus. Dans une deuxième architecture, la zone située au niveau du coup de pied sera laissée libre et recouverte par un capot indépendant fixée au bas de coque et venant occuper l'espace libre présent entre le pan latéral 23 et le pan médial 22.

Dans la suite de la description, les références employées pour décrire le bas de coque classique, qui est représenté sur les figures 3A et 3B, sont réutilisées à l'identique dans la mesure où les éléments décrits restent les mêmes.

Selon l'invention, le bas de coque 2, dont les différentes parties ont été présentées ci-dessus, est divisé en deux parties distinctes solidaires entre elles :
- une première partie formant un châssis,
- une deuxième partie formant une enveloppe.

L'invention réside dans le fait de réaliser le châssis et l'enveloppe dans deux matériaux distincts, le premier matériau ayant pour base un composant majoritaire distinct du composant majoritaire du deuxième matériau.

Le châssis est ainsi réalisé dans un deuxième matériau et l'enveloppe est réalisée dans un premier matériau. De cette manière, il est possible de leur attribuer des caractéristiques mécaniques différentes. Le châssis représente par exemple un volume en matière supérieur à 50% du volume total du bas de coque.

Selon l'invention, l'enveloppe est réalisée dans un premier matériau possédant un premier niveau de raideur en flexion et le châssis est réalisé dans un deuxième matériau possédant un deuxième niveau de raideur en flexion. Pour permettre de répondre aux exigences de rigidité et de souplesse du bas de coque, le premier matériau possède un niveau de raideur en flexion inférieur à celui du deuxième matériau.

Selon l'invention, le deuxième matériau est à base de polyamide. Il est par exemple choisi pour présenter un deuxième niveau de raideur en flexion ayant une valeur comprise entre 200 MPa et 2000 MPa, préférentiellement compris entre 400 MPa et 1200 MPa. Par ailleurs, il est préférentiellement choisi avec une densité comprise entre 0.90 et 1.55, de préférence entre 0.98 et 1.07.

Selon l'invention, avec ces caractéristiques mécaniques, le deuxième matériau à base de polyamide est choisi parmi les matériaux suivants : PA6, PA6.6, PA11, PA12, PA6.10, PA4.10, PA 10.10 associés ou non à des modifiants chocs base polyoléfines ou acryliques ou/et des charges de renfort du type verre, carbone, minérales.

Selon l'invention, le premier matériau est à base de polyuréthane, celui-ci ayant un niveau de raideur en flexion plus faible que le polyamide. Le premier matériau est choisi pour présenter un premier niveau de raideur en flexion ayant une valeur comprise entre 150 MPa et 1000 MPa. Il est également choisi avec une densité comprise entre 1.15 et 2.3, de préférence entre 1.15 et 1.25.

En tenant compte de ces caractéristiques mécaniques, ce premier matériau est par exemple choisi parmi le polyuréthane, un mélange de polyuréthane et de caprolactone, le polyuréthane éther, un mélange de polyuréthane éther et de caprolactone. On pourra notamment utiliser des Polyuréthanes thermoplastiques, des Esters, des Ethers associés à des modifiants chocs base ABS ou/et des modifiants de comportement thermique de type caprolactone.

Le châssis et l'enveloppe sont assemblés par surmoulage. Un procédé de fabrication spécifique permet la réalisation du surmoulage. Ce surmoulage consiste en une injection du premier matériau de manière à former l'enveloppe puis en une injection du deuxième matériau sur l'enveloppe de manière à former le châssis. Une zone de recouvrement de matière est réalisée à la jonction du châssis et de l'enveloppe du bas de coque. Selon une particularité de l'invention, le châssis et l'enveloppe sont réalisés avec une épaisseur de matériau supérieure ou égale à 2.5 millimètres. Dans la zone de recouvrement entre les deux matières, l'épaisseur du premier matériau est supérieure ou égale à 1,5 millimètre.

Avantageusement la température d'injection du deuxième matériau est plus élevée que celle du premier matériau. Dans le cas où le premier matériau est un Polyuréthane, cette température d'injection est comprise entre 190 et 230 °C, tandis que celle du deuxième matériau est comprise entre 240 et 300 °C.

En partant du principe de l'invention qui consiste à réaliser le châssis et l'enveloppe dans deux matériaux différents tels que définis ci-dessus, on distingue plusieurs modes de réalisation de l'invention.

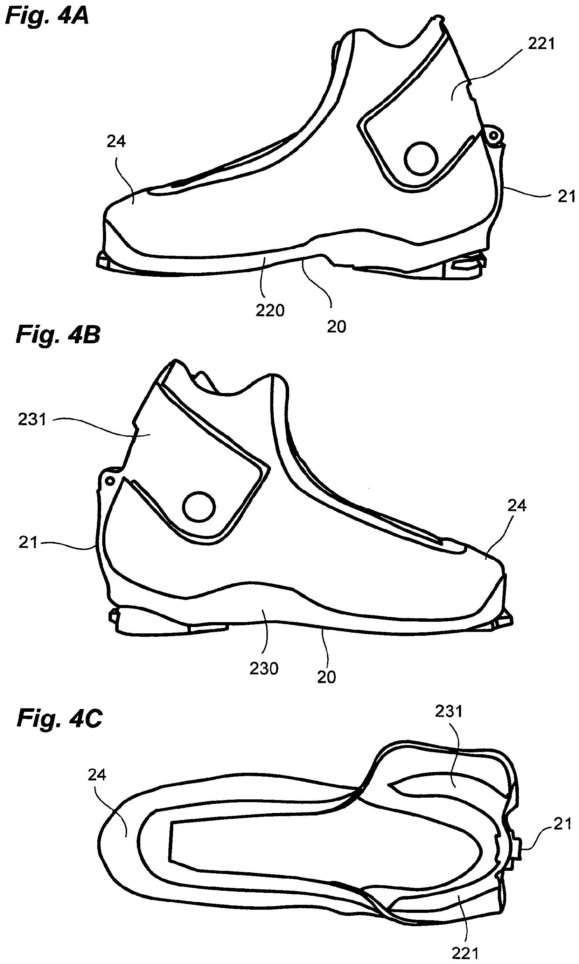

Dans un premier mode de réalisation représenté sur les figures 4A à 4C, les parties suivantes du bas de coque constituent le châssis et sont donc réalisés dans le deuxième matériau tel que défini ci-dessus :
- la semelle 20,
- l'arête dorsale 21 destinée à longer le tendon d'Achille du pied,
- une partie bord de semelle 220 (figure 4A), 230 (figure 4B) qui suit le contour de la semelle sur la partie basse du pan médial et du pan latéral et qui est destinée à envelopper la partie basse du pied,
- une partie intermédiaire formant un étrier comprenant une base située dans le prolongement de l'arête dorsale et s'étendant pour envelopper, depuis sa base, par une première zone 221 (figure 4A) située sur le pan médial, la malléole médiale du pied, et par une deuxième zone 231 (figure 4B) située sur le pan latéral, la malléole latérale du pied.

Dans ce premier mode de réalisation, l'enveloppe du bas de coque recouvre pour sa part la boîte à orteils 24 (figure 4C), le pan latéral et le pan médial, à l'exception des zones définies ci-dessus pour le châssis. Sur les figures 4A à 4C, le bas de coque est représenté selon la deuxième architecture définie ci-dessus mais il faut comprendre qu'il peut être réalisé selon la première architecture définie ci-dessus, incluant alors les deux rabats 25a, 25b.

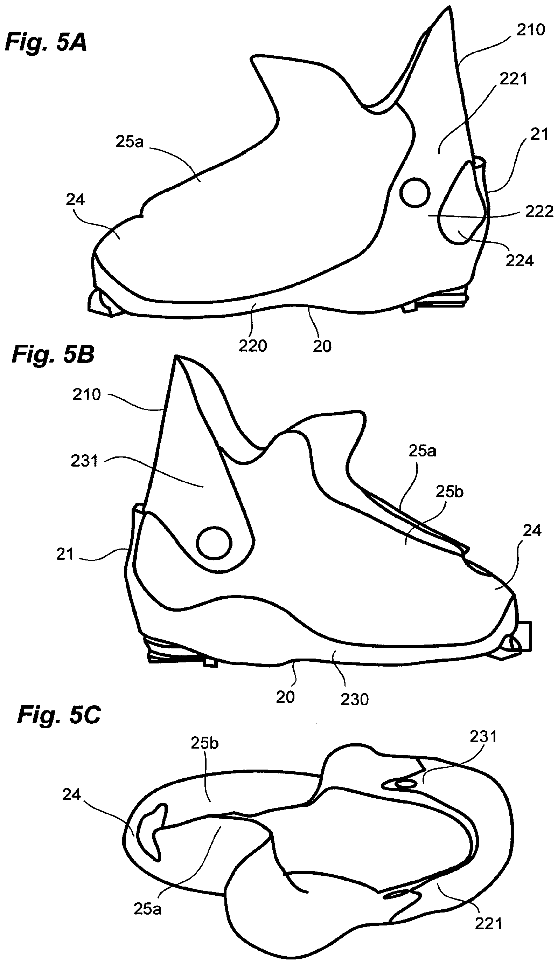

Dans un deuxième mode de réalisation représenté sur les figures 5A à 5C, les parties suivantes du bas de coque constituent le châssis et sont donc réalisés dans le deuxième matériau tel que défini ci-dessus :
- la semelle 20,
- l'arête dorsale 21 destinée à longer le tendon d'Achille du pied,
- une partie bord de semelle 220 (figure 5A), 230 (figure 5B) qui suit le contour de la semelle sur la partie basse du pan médial et du pan latéral et qui est destinée à envelopper la partie basse du pied,
- une partie intermédiaire formant un étrier comprenant une base située dans le prolongement de l'arête dorsale et s'étendant pour envelopper, depuis sa base, par une première zone 221 (figure 5A) située sur le pan médial, la malléole médiale du pied, et par une deuxième zone 231 (figure 5B) située sur le pan latéral, la malléole latérale du pied,
- un premier pontet 222 (figure 5A) réalisé sur le pan médial du bas de coque et reliant la première zone de l'étrier à ladite partie bord de semelle 220.

Avantageusement, dans ce deuxième mode de réalisation, le châssis réalisé dans le deuxième matériau défini ci-dessus peut également inclure un spoiler 210 arrière prolongeant l'arête dorsale 21 et la base de l'étrier du bas de coque vers le haut.

Dans ce deuxième mode de réalisation, l'enveloppe du bas de coque recouvre pour sa part la boîte à orteils 24, le pan latéral et le pan médial, à l'exception des zones définies ci-dessus pour le châssis. Dans ce mode de réalisation, les deux rabats 25a, 25b font partie de l'enveloppe. Sur les figures 5A à 5C, le bas de coque est représenté selon la première architecture définie ci-dessus mais il faut comprendre qu'il peut être réalisé selon la deuxième architecture définie ci-dessus, c'est-à-dire sans les rabats.

Dans ce deuxième mode de réalisation, le pontet 222 qui relie l'arête dorsale 21 à la partie bord de semelle 220 et qui est réalisé en polyamide définit ainsi un ilot 224 appartenant à l'enveloppe et réalisé en polyuréthane.

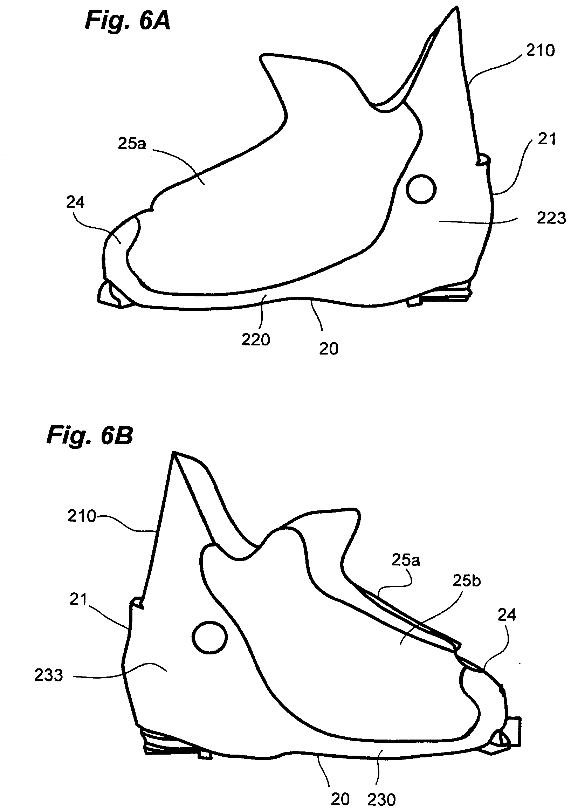

Dans un troisième mode de réalisation représenté sur les figures 6A et 6B, les parties suivantes du bas de coque constituent le châssis et sont donc réalisés dans le deuxième matériau tel que défini ci-dessus :
- la semelle 20,
- l'arête dorsale 21 destinée à longer le tendon d'Achille du pied,
- une partie bord de semelle 220 (figure 6A), 230 (figure 6B) qui suit le contour de la semelle sur la partie basse du pan médial et du pan latéral et qui est destinée à envelopper la partie basse du pied,
- une partie intermédiaire comprenant une base prolongeant l'arête dorsale et s'étendant jusqu'à la partie bord de semelle, par une première zone 223 (figure 6A) située sur le pan médial, qui recouvre la malléole et le talon du côté médial du pied, et par une deuxième zone 233 (figure 6B) située sur le pan latéral, qui recouvre la malléole et le talon du côté latéral du pied.

Avantageusement, dans ce troisième mode de réalisation, le châssis réalisé dans le deuxième matériau défini ci-dessus peut également inclure un spoiler 210 arrière prolongeant l'arête dorsale 21 et la base de l'étrier du bas de coque vers le haut.

Dans ce troisième mode de réalisation, l'enveloppe du bas de coque recouvre pour sa part la boîte à orteils 24, le pan latéral et le pan médial, à l'exception des zones définies ci-dessus pour le châssis. Dans ce mode de réalisation, les deux rabats 25a, 25b font partie de l'enveloppe. Sur les figures 6A et 6B, le bas de coque est représenté selon la première architecture définie ci-dessus mais il faut comprendre qu'il peut être réalisé selon la deuxième architecture définie ci-dessus, c'est-à-dire sans les rabats.

Le bas de coque de l'invention tel que défini dans chaque mode de réalisation décrit ci-dessus présente ainsi de nombreux avantages. Il est ainsi doté d'une rigidité importante et suffisante sur sa partie châssis, permettant la pratique d'un ski précis, et d'une certaine souplesse sur sa partie enveloppe, pour assurer un certain confort et obtenir un bon enveloppement du pied.

L'invention ne se limite pas aux seuls modes de réalisation décrits ici à titre d'exemple. Notamment, des éléments de coque autre que le bas de coque peuvent être réalisés conformément à l'invention. Par exemple, on pourra de manière similaire fabriquer le collier par moulage d'une première partie avec un matériau de type polyuréthane, suivi du surmoulage sur cette première partie, d'une deuxième partie avec un matériau de type polyamide.

## Revendications

1. Bas de coque obtenu par moulage d'une matière plastique pour chaussure de ski, ledit bas de coque (2) étant destiné à envelopper un pied ou une partie d'un pied et comprenant une première partie réalisée avec un premier matériau et une deuxième partie réalisée avec un deuxième matériau, ledit premier matériau étant à base de polyuréthane et possédant un premier niveau de raideur en flexion, ou module de flexion, compris entre 150 et 1000 MPa et qui est plus faible que le niveau de raideur en flexion, ou module de flexion, du deuxième matériau, lequel étant à base de polyamide est compris entre 200 et 2000 MPa.

2. Bas de coque selon la revendication 1, **caractérisé en ce qu'**il comprend une première partie formant une enveloppe et une deuxième partie formant un châssis, ledit châssis comportant au moins :
- une partie inférieure formant une semelle (20) destinée à coopérer avec une fixation sur un ski,
- une partie bord de semelle (220, 230) qui suit le contour de la semelle du côté médial du pied et du côté latéral du pied,
- une partie arrière formant une arête dorsale (21) agencée pour longer le tendon d'Achille du pied,
- une partie intermédiaire formant un étrier comprenant une base située dans le prolongement de l'arête dorsale et s'étendant pour envelopper, depuis sa base, par une première zone (221) située sur le pan médial, la malléole médiale du pied, et par une deuxième zone (231) située sur le pan latéral, la malléole latérale du pied,
**et en ce que** :
- le bas de coque (2) est obtenu par surmoulage dudit châssis réalisé dans un deuxième matériau sur ladite enveloppe réalisée dans un premier matériau.

3. Bas de coque selon la revendication 2, **caractérisé en ce que** le châssis comporte également un pontet (222) reliant la première zone (221) de l'étrier à ladite partie bord de semelle (220) située du côté médial.

4. Bas de coque selon l'une des revendications 2 ou 3, **caractérisé en ce que** le châssis comprend une partie bord de semelle (220, 230) qui suit le contour de la semelle du côté médial du pied et du côté latéral du pied.

5. Bas de coque selon la revendication 3, **caractérisé en ce que** la partie intermédiaire est agencée pour envelopper, jusqu'à la partie bord de semelle, par une première zone (223), la malléole et le talon du côté médial du pied, et par une deuxième zone (233), la malléole et le talon du côté latéral du pied.

6. Bas de coque selon l'une des revendications 2 à 5, **caractérisé en ce que** le châssis comporte également un spoiler qui prolonge l'arête dorsale et la base de l'étrier vers le haut du bas de coque.

7. Bas de coque selon l'une des revendications 2 à 6, **caractérisé en ce que** le matériau à base de polyamide présente une densité comprise entre 0.90 et 1.07.

8. Bas de coque selon la revendication 7, **caractérisé en ce que** le matériau à base de polyamide est choisi parmi le PA6, PA6/6, PA6/10, PA4/10, PA11, PA12.

9. Bas de coque selon la revendication 8, **caractérisé en ce que** le matériau à base de polyamide comporte des modifiants chocs.

10. Bas de coque selon l'une des revendications 2 à 9, **caractérisé en ce que** le matériau à base de polyuréthane présente une densité comprise entre 1.15 et 1.25.

11. Bas de coque selon l'une des revendications 2 ou 10, **caractérisé en ce que** le matériau est choisi parmi le polyuréthane, un mélange de polyuréthane et de caprolactone, le polyuréthane éther, un mélange de polyuréthane éther et de caprolactone, le polyurethane ester, un mélange de polyurethane ester et de caprolactone.

12. Chaussure de ski, **caractérisée en ce qu'**elle comporte un bas de coque tel que défini dans l'une des revendications 1 à 11.

13. Procédé de fabrication d'un bas de coque selon l'une des revendications 1 à 11, comprenant les étapes suivantes :
- Moulage de la première partie avec ledit premier matériau,
- Surmoulage de la deuxième partie avec ledit deuxième matériau ;
ledit premier matériau possédant un premier niveau de raideur en flexion compris entre 150 et 1000 MPa qui est plus faible que le niveau de raideur en flexion du deuxième matériau, lequel est compris entre 200 et 2000 MPa.

## Patentansprüche

1. Skistiefelunterschale, die durch Formen eines Kunststoffs erhalten worden ist, wobei die Unterschale (2) dazu bestimmt ist, einen Fuß oder einen Teil eines Fußes zu umfangen, und einen ersten Teil, der mit einem ersten Material ausgeführt ist, und einen zweiten Teil, der mit einem zweiten Material ausgeführt ist, umfasst, wobei das erste Material auf Polyurethan basiert und ein erstes Biegesteifigkeits- oder Biegemodulniveau zwischen 150 und 1000 MPa hat, das niedriger als das zwischen 200 und 2000 MPa liegende Biegesteifigkeits- oder Biegemodulniveau des zweiten Materials ist, das auf Polyamid basiert.

2. Unterschale nach Anspruch 1, **dadurch gekennzeichnet, dass** sie einen ersten Teil, der eine Umhüllung bildet, und einen zweiten Teil, der ein Gestell bildet, umfasst, wobei das Gestell mindestens Folgendes aufweist:
- einen unteren Teil, der eine Sohle (20) bildet und zum Zusammenwirken mit einer Bindung an einem Ski bestimmt ist,
- einen Sohlenrandteil (220, 230), der der Kontur der Sohle an der medialen Seite des Fußes und der lateralen Seite des Fußes folgt,
- einen hinteren Teil, der Rückenrippe (21) bildet, die dazu angeordnet ist, an der Achillessehne des Fußes entlangzulaufen,
- einen Zwischenteil, der einen Bügel bildet, der eine Basis umfasst, die sich in der Verlängerung der Rückenrippe befindet und sich erstreckt, um von seiner Basis mittels einer ersten Zone (221), die an der medialen Seite angeordnet ist, den medialen Knöchel des Fußes und mittels einer zweiten Zone (231), die an der lateralen Seite angeordnet ist, den lateralen Knöchel des Fußes zu umfangen,
und dass:
- die Unterschale (2) durch Überspritzen des Gestells, das in einem zweiten Material ausgeführt ist, auf die Umhüllung, die in einem ersten Material ausgeführt ist, erhalten wird.

3. Unterschale nach Anspruch 2, **dadurch gekennzeichnet, dass** das Gestell auch eine Brücke (222) aufweist, die die erste Zone (221) des Bügels mit dem an der medialen Seite angeordneten Sohlenrandteil (220) verbindet.

4. Unterschale nach einem der Ansprüche 2 oder 3, **dadurch gekennzeichnet, dass** das Gestell einen Sohlenrandteil (220, 230) umfasst, der der Kontur der Sohle an der medialen Seite des Fußes und an der lateralen Seite des Fußes folgt.

5. Unterschale nach Anspruch 3, **dadurch gekennzeichnet, dass** der Zwischenteil dazu angeordnet ist, bis zum Sohlenrandteil den Knöchel und die Ferse an der medialen Seite des Fußes mittels einer ersten Zone (223) und den Knöchel und die Ferse an der lateralen Seite des Fußes mittels einer zweiten Zone (233) zu umfangen.

6. Unterschale nach einem der Ansprüche 2 bis 5, **dadurch gekennzeichnet, dass** das Gestell auch einen Spoiler aufweist, der die Rückenrippe und die Basis des Bügels zu der Oberseite der Unterschale hin verlängert.

7. Unterschale nach einem der Ansprüche 2 bis 6, **dadurch gekennzeichnet, dass** das Material auf Polyamidbasis eine Dichte zwischen 0,09 und 1,07 aufweist.

8. Unterschale nach Anspruch 7, **dadurch gekennzeichnet, dass** das Material auf Polyamidbasis unter PA6, PA6/6, PA6/10, PA4/10, PA11, PA12 ausgewählt ist.

9. Unterschale nach Anspruch 8, **dadurch gekennzeichnet, dass** das Material auf Polyamidbasis Schlagzähmodifizierer aufweist.

10. Unterschale nach einem der Ansprüche 2 bis 9, **dadurch gekennzeichnet, dass** das Material auf Polyurethanbasis eine Dichte zwischen 1,15 und 1,25 aufweist.

11. Unterschale nach einem der Ansprüche 2 oder 10, **dadurch gekennzeichnet, dass** das Material unter Polyurethan, einem Gemisch aus Polyurethan und Caprolacton, Polyurethanether, einem Gemisch aus Polyurethanether und Caprolacton, Polyurethanester, einem Gemisch aus Polyurethanester und Caprolacton ausgewählt ist.

12. Skistiefel, **dadurch gekennzeichnet, dass** er eine Unterschale nach einem der Ansprüche 1 bis 11 aufweist.

13. Verfahren zur Herstellung einer Unterschale nach einem der Ansprüche 1 bis 11, umfassend die folgenden Schritte:
- Formen des ersten Teils mit dem ersten Material,
- Überspritzen des zweiten Teils mit dem zweiten Material,
wobei das erste Material ein erstes Biegesteifigkeitsniveau zwischen 150 und 1000 MPa hat, das niedriger als das Biegesteifigkeitsniveau des zweiten Materials ist, das zwischen 200 und 2000 MPa liegt.

## Claims

1. Lower shell obtained by moulding a plastics material for a ski boot, said lower shell (2) being intended to envelop a foot or part of a foot and comprising a first part made from a first material and a second part made from a second material, said first material being based on polyurethane and having a first level of flexural stiffness, or flexural modulus, of between 150 and 1000 MPa, which is lower than the level of flexural stiffness, or flexural modulus, of the second material, which is based on polyamide and is between 200 and 2000 MPa.

2. Lower shell according to Claim 1, **characterized in that** it comprises a first part forming an envelope and a second part forming a frame, said frame having at least:
- a lower part forming a sole (20) intended to cooperate with a binding on a ski,
- a sole edge part (220, 230) which follows the contour of the sole on the medial side of the foot and on the lateral side of the foot,
- a rear part forming a dorsal ridge (21) arranged so as to follow the Achilles tendon of the foot,
- an intermediate part forming a stirrup comprising a base that is situated in the continuation of the dorsal ridge and extends so as to envelop, from its base, via a first zone (221) situated on the medial face, the medial malleolus of the foot, and via a second zone (231) situated on the lateral face, the lateral malleolus of the foot,
and **in that**
- the lower shell (2) is obtained by overmoulding said frame made from a second material over said envelope made from a second material.

3. Lower shell according to Claim 2, **characterized in that** the frame also has a bridge (222) connecting the first zone (221) of the stirrup to said sole edge part (220) situated on the medial side.

4. Lower shell according to either of Claims 2 and 3, **characterized in that** the frame comprises a sole edge part (220, 230) which follows the contour of the sole on the medial side of the foot and on the lateral side of the foot.

5. Lower shell according to Claim 3, **characterized in that** the intermediate part is arranged so as to envelop, as far as the sole edge part, via a first zone (223), the malleolus and the heel on the medial side of the foot, and via a second zone (233), the malleolus and the heel on the lateral side of the foot.

6. Lower shell according to one of Claims 2 to 5, **characterized in that** the frame also has a spoiler which continues the dorsal ridge and the base of the stirrup towards the top of the lower shell.

7. Lower shell according to one of Claims 2 to 6, **characterized in that** the material based on polyamide has a density of between 0.90 and 1.07.

8. Lower shell according to Claim 7, **characterized in that** the material based on polyamide is chosen from PA6, PA6/6, PA6/10, PA4/10, PA11, PA12.

9. Lower shell according to Claim 8, **characterized in that** the material based on polyamide has impact modifiers.

10. Lower shell according to one of Claims 2 to 9, **characterized in that** the material based on polyurethane has a density of between 1.15 and 1.25.

11. Lower shell according to either of Claims 2 and 10, **characterized in that** the material is chosen from polyurethane, a compound of polyurethane and caprolactone, polyurethane ether, a compound of polyurethane ether and caprolactone, polyurethane ester, a compound of polyurethane ester and caprolactone.

12. Ski boot, **characterized in that** it has a lower shell as defined in one of Claims 1 to 11.

13. Method for manufacturing a lower shell according to one of Claims 1 to 11, comprising the following steps:
- moulding the first part with the first material,
- overmoulding the second part with said second material;
said first material having a first level of flexural stiffness of between 150 and 1000 MPa which is lower than the level of flexural stiffness of the second material, which is between 200 and 2000 MPa.
